(19) Europäisches Patentamt
European Patent Office
Office européen des brevets

(11) **EP 4 163 800 A1**

(12) **EUROPEAN PATENT APPLICATION**
published in accordance with Art. 153(4) EPC

(43) Date of publication:
**12.04.2023 Bulletin 2023/15**

(21) Application number: **21928353.8**

(22) Date of filing: **31.07.2021**

(51) International Patent Classification (IPC):
**G06F 16/2458** (2019.01)     **G06F 16/2453** (2019.01)
**G06F 11/34** (2006.01)

(52) Cooperative Patent Classification (CPC):
**G06F 16/24549; G06F 11/3006; G06F 11/3447;**
**G06F 11/3495; G06F 16/2453; G06F 16/2477;**
G06F 2201/80

(86) International application number:
**PCT/CN2021/109932**

(87) International publication number:
**WO 2022/267182 (29.12.2022 Gazette 2022/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.06.2021 CN 202110688663**

(71) Applicant: **KUYUN (SHANGHAI) INFORMATION**
**TECHNOLOGY**
**CO., LTD.**
**Shanghai 200120 (CN)**

(72) Inventors:
• **LI, Yang**
  **Pudong New Area, Shanghai 200120 (CN)**
• **HAN, Qing**
  **Pudong New Area, Shanghai 200120 (CN)**

(74) Representative: **Ipey**
**Apex House**
**Thomas Street**
**Trethomas**
**Caerphilly CF83 8DP (GB)**

(54) **PRE-COMPUTATION METHOD AND APPARATUS FOR CONTINUOUS ITERATIVE OPTIMIZATION**

(57)     This application discloses a precomputation method and apparatus for continuous iterative optimization. The precomputation method for continuous iterative optimization includes: determining a query task corresponding to each of a plurality of time periods; and continuously performing multiple rounds of optimization on a precomputation model according to the query task corresponding to each time period. According to this application, the precomputation model is continuously optimized, so that the performance of the precomputation model is improved. Therefore, the technical problem of poor performance caused by long-term non-tuning of the precomputation model can be avoided.

EP 4 163 800 A1

A query task corresponding to each of a plurality of time periods is determined — S102

Multiple rounds of optimization are continuously performed on a precomputation model according to the query task corresponding to each time period — S104

**Fig. 1**

## Description

## BACKGROUND

This application claims priority to Chinese Patent Application No. 2021106886637, filed to the China National Intellectual Property Administration on June 21, 2021 and entitled "PRECOMPUTATION METHOD AND APPARATUS FOR CONTINUOUS ITERATIVE OPTIMIZATION", which is incorporated herein by reference in its entirety.

## Technical Field

This application relates to the field of computers, and specifically, to a precomputation method and apparatus for continuous iterative optimization.

## Description of Related Art

In an actual production environment, query workloads and data features vary all the time. The computation performance of an Online Analytical Processing (OLAP) precomputation model is obviously reduced over a period of time, generally a few weeks to a few months. Therefore, an optimized method is required to improve the performance of the OLAP precomputation model. However, there is no corresponding solution in the prior art.

## SUMMARY

This application is mainly intended to provide a precomputation method and apparatus for continuous iterative optimization, to resolve the above problems.

In order to realize the above purpose, an aspect of this application provides a precomputation method for continuous iterative optimization, including the following operations.

A query task corresponding to each of a plurality of time periods is determined.

Multiple rounds of optimization are continuously performed on a precomputation model according to the query task corresponding to each time period.

In an implementation, the operation of continuously performing multiple rounds of optimization on the precomputation model according to the query task corresponding to each time period includes the following operations.

For any time period, a first query task corresponding to the time period is determined when the time period starts.

In the time period, the precomputation model is optimized according to the first query task.

Optimizing the precomputation model is stopped when the time period ends.

A second query task corresponding to a next time period is determined when entering the next time period, and the precomputation model is continuously optimized according to the second query task.

In an implementation, the operation of optimizing the precomputation model according to the first query task includes the following operations.

Time consumption and query resource consumption of the first query task are determined.

The precomputation model is optimized according to the time consumption and query resource consumption of the first query task.

In an implementation, the operation of determining a first query task corresponding to the current time period includes the following operations.

A query request sent by a client is received.

The query task of the time period is determined according to the query request.

In an implementation, the operation of calculating computation resource consumption includes the following operations. A resource of each query server in a cloud server is calculated.

Total query resource consumption is calculated according to the resource consumption of each query server.

In order to realize the above purpose, another aspect of this application provides a precomputation apparatus for continuous iterative optimization, including a query task determination module and an optimization module.

The query task determination module is configured to determine a query task corresponding to each of a plurality of time periods.

The optimization module is configured to continuously perform multiple rounds of optimization on a precomputation model according to the query task corresponding to each time period.

In an implementation, the query task determination module is further configured to: for any time period, determine a first query task corresponding to the current time period when the time period starts; and determine a second query task corresponding to a next time period when entering the next time period.

The optimization module is further configured to: optimize, in the time period, the precomputation model according to the first query task; stop optimizing the precomputation model when the time period ends; and when entering the next time period, continuously optimize the precomputation model according to the second query task.

In an implementation, the optimization module is further configured to determine time consumption and query resource consumption of the first query task.

The precomputation model is optimized according to the time consumption and query resource consumption of the first query task.

In an implementation, the optimization module is further configured to calculate a resource of each query server in a cloud server.

Total query resource consumption is calculated according to the resource consumption of each query server.

In an implementation, the method further includes the following.

A score of the precomputation model in the first query task and/or the second query task is calculated by using the following formula.

$$\theta = \frac{\lambda}{A \times B}$$

$\theta$ is a marked score, A is an occupied computation resource, B is the query time, and $\lambda$ is a preset unit weight.

In an implementation, the method further includes the following operation.

If computation time being longer, the score being lower, and if the occupied resource being more, the score being lower.

If query resource consumption is greater than a predetermined resource consumption threshold, a model structure is optimized.

In an implementation, the method further includes the following operations.

Input raw data is acquired.

A plurality of physical indexes in the raw data are extracted. Each physical index has same and/or different dimensions, and the physical index is classified according to the dimension of the physical index, to obtain a dimension classification result.

The precomputation model is optimized based on the dimension classification result.

In an implementation, the optimization module is further configured to perform the following operation.

A score of the precomputation model in the first query task and/or the second query task is calculated by using the following formula.

$$\theta = \frac{\lambda}{A \times B}$$

$\theta$ is a marked score, A is an occupied computation resource, B is the query time, and $\lambda$ is a preset unit weight.

In an implementation, the optimization module is further configured to perform the following operations.

If computation time being longer, the score being lower, and if the occupied resource being more, the score being lower.

If query resource consumption is greater than a predetermined resource consumption threshold, a model structure is optimized.

In an implementation, the apparatus further includes an acquisition module, an extraction module, and the optimization module.

The acquisition module is configured to acquire input raw data.

The extraction module is configured to extract a plurality of physical indexes in the raw data. Each physical index has same and/or different dimensions, and the physical index is classified according to the dimension of the physical index, to obtain a dimension classification result.

The optimization module is configured to optimize the precomputation model based on the dimension classification result.

According to this application, the precomputation model is optimized, so that the performance of the precomputation model is improved. Therefore, the technical problem of poor performance caused by long-term non-tuning of the precomputation model can be avoided.

**BRIEF DESCRIPTION OF THE DRAWINGS**

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:

Fig. 1 is a flowchart of a precomputation method for continuous iterative optimization according to an embodiment of this application.
Fig. 2 is a schematic diagram of a query system using a precomputation model according to an embodiment of this application.
Fig. 3 is a schematic structural diagram of a precomputation apparatus for continuous iterative optimization according to an embodiment of this application.

**DESCRIPTION OF THE EMBODIMENTS**

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application.

It is to be noted that terms "first", "second" and the like in the description, claims and the above mentioned drawings of this application are used for distinguishing similar objects rather than describing a specific sequence or a precedence order. It should be understood that the data used in such a way may be exchanged where appropriate, in order that the embodiments of this application described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

It is to be noted that the embodiments in this application and the features in the embodiments may be combined with one another without conflict. The this application will now be described below in detail with reference to the drawings and the embodiments.

Technical terms in the field are first introduced.

An On-Line Analytical Processing (OLAP) system specifically refers to a database system with complex SQL queries as a main workload in the field of big data, which is mostly used for data analysis and query engines of BI.

Precomputation is to reduce online calculation quantity. In the field of big data, due to the huge amount of data, it is easy to slowdown online query. Therefore, it is a common technical means to reduce the online calculation quantity with full precomputation, which can greatly reduce the online calculation quantity and accelerate an online query response speed.

A precomputation model/multidimensional cube is the definition of a set of Cuboid/Aggregated Index/Materialized View, describes a precomputation solution, and is generally designed to accelerate a set of specific SQL queries. By performing multiple precomputations on raw data, Cuboid/Aggregated Index/Materialized View is generated, and a precomputation result is fully utilized during query, so that the purpose of rapid response is achieved. The quality of the precomputation model directly determines the efficiency of precomputation and an effect of query acceleration.

A precomputation and query cluster is a computation cluster composed of a plurality of computers according to a certain network structure.

A computation resource is the computation resource that is required to perform precomputation or SQL query, such as a CPU resource, an internal storage resource, a storage resource, and a network bandwidth resource included in the cluster.

Query load is an execution process of a set of SQL queries according to a specific time sequence, which may be parallel execution, or serial execution, or a mixture of parallel execution and serial execution.

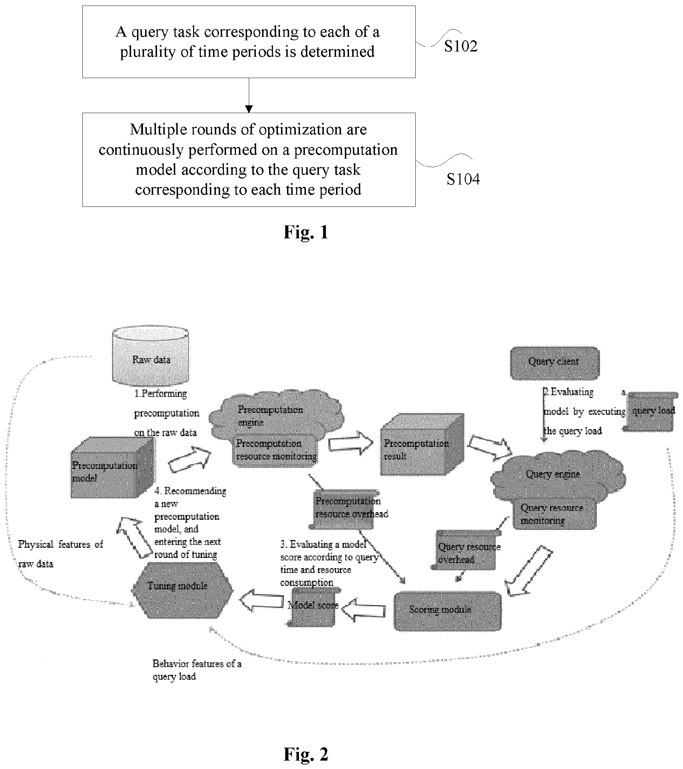

This application provides a precomputation method for continuous iterative optimization. Fig. 1 is a flowchart of a precomputation method for continuous iterative optimization. The method includes the following steps.

At S102, a query task corresponding to each of a plurality of time periods is determined.

The time period may be a day, a week, a month, or a season, which may specifically and flexibility set. Preferably, a precomputation model may be periodically tuned. Interval time may be a day, a week, or an hour, which is determined according to an external data query task. If the query task is frequent, the tuned period is shortened. If the query task is less, the tuned period may be set to be relatively long, which may be flexibly set.

Preferably, the time period is a day.

Specifically, the query task mainly comes from query requests sent by a large number of clients of users. The query task varies in real time. At different time periods, the query task is different.

At S104, multiple rounds of optimization are continuously performed on a precomputation model according to the query task corresponding to each time period.

Specifically, during optimization, according to a predetermined target loss function, optimization may be performed by reducing the target loss function to predetermined prefabrication as a target.

Alternatively, a condition may be magnified, and optimization may be performed by not increasing the target loss function as the target. That is to say, after optimization, an output result of the precomputation model should be convergent, not divergent.

According to the above method of the present invention, the precomputation model is continuously optimized, so that the performance of computation is improved. Therefore, the reduction of computation performance caused by the precomputation model being not optimized for a long time can be prevented.

In an implementation, the step of continuously performing multiple rounds of optimization on the precomputation model according to the query task corresponding to each time period includes the following operations.

For any time period, a first query task corresponding to the current time period is determined when the time period starts.

In the time period, the precomputation model is optimized according to the first query task.

Optimizing the precomputation model is stopped when the time period ends.

A second query task corresponding to a next time period is determined when entering the next time period, and the precomputation model is continuously optimized according to the second query task.

In an implementation, the step of optimizing the precomputation model according to the first query task includes the following operations.

Time consumption and query resource consumption of the first query task are determined.

The precomputation model is optimized according to the time consumption and query resource consumption of the first query task.

Specifically, an optimized target function includes query time and query resource consumption.

That is to say, in the precomputation model, for the same query task, after optimization, the time for the query task is less than the time for the query task before optimization. Optimized query resource overhead is less than query resource overhead before optimization.

In an implementation, for any time period, the first query task corresponding to the current time period is determined when the time period starts.

When the query task is executed, the query task is executed in a distributed query server cluster of cloud where the query engine is invoked according to the query request.

In an implementation, when computation resource consumption is calculated, a resource of each query server in a cloud server is calculated. Total query resource consumption is calculated according to the resource consumption of each query server.

Specifically, a query system of a cloud includes a cluster of servers, including a plurality of query servers. A distributed computation mode is used for query.

Computation resource consumption includes: a CPU or GPU resource, an internal storage resource, and a storage resource.

Exemplarily, a computation resource may be a disk storage space.

Alternatively, the computation resource is a resource occupied by a network which is a network occupied by data transmission from one node to another.

Exemplarily, when the precomputation model A performs query calculation, 10 servers are used. Each server includes a CPU of 16 GB, hard disk storage of 500 GB, and an internal storage of 16 T, and a speed of a network bandwidth is 1 G per second. The 10 servers take one hour to complete the query for a query task.

For the same query task, when the precomputation model B performs query calculation, if 5 servers are used, the servers also take 1 hour to complete the query task with same configuration. Then a score of the precomputation model B is determined to be twice the score of the precomputation model A.

$$\theta = \frac{\lambda}{A \times B};$$

$\theta$ is the score, A is the occupied computation resource, and B is the query time.

$\lambda$ is a preset unit weight, and the weight is obtained according to analysis and statistics of big data.

Exemplarily, for A, when 10 servers are used, each server includes the CPU of 16 GB, the hard disk storage of 500 GB, and the internal storage of 16 T, and the speed of the network bandwidth is 1 G per second, A is regarded as 1.

If 20 servers are used, other parameters remain unchanged, each server includes the CPU of 16 GB, the hard disk storage of 500 GB, and the internal storage of 16 T, and the speed of the network bandwidth is 1 G per second, A is regarded as 2.

If A is 1, it takes 1 hour, and B is 1; and $\lambda$ is 100, the score $\theta$ = 100.

If A remains unchanged, it takes 2 hours, and B is 2; and the score $\theta$ = 50.

If B remains unchanged, and A becomes 2, the score becomes 50.

The above formula indicates that, the score is inversely proportional to computation time, and is inversely proportional to the occupied resource. When the same task is completed, if the computation time is longer, the score is lower, and if the occupied resource is more, the score is lower.

When the precomputation model is optimized, for executing the same query load, if query time is greater than a predetermined time threshold, the model structure is optimized, and the query time is shortened. If the query resource consumption is greater than a predetermined resource consumption threshold, the model structure is optimized, and the resource consumption is reduced.

The technical solution provided in the present invention further includes the following operation.

Input raw data is acquired. The precomputation model in the present invention may have different computation dimensions according to different input data. If there are more dimensions of the raw data, there are more dimensions during the computation of the precomputation model, and the computation quantity of the precomputation model is also increased.

A plurality of physical indexes in the raw data are extracted. Each physical index has same and/or different dimensions, and the physical index is classified according to the dimension of the physical index, to obtain a dimension classification result. According to the present invention, after the raw data is obtained, dimension calculation is performed according to the dimensions of different physical indexes in the raw data, so that the dimension classification result is obtained. For example, if the raw data is in a tabular form, there are a plurality of columns in the raw data. Different columns may have respective dimensions. In this case, in the present invention, the dimensions of the plurality of physical indexes are classified according to the cardinality of each column in the table and the correlation between the columns, so that the classified dimension classification result is obtained. Through the above method, the dimension quantity of the raw data is reduced. Therefore, the dimension during the computation of the precomputation model is reduced, data processing capacity is reduced, and data processing speed is accelerated. The physical indexes may be time, places, or the like.

The precomputation model is optimized based on the dimension classification result. Through the above method, an effect of reducing the dimension quantity of the precomputation model by classifying the raw data can be achieved. When the precomputation model is optimized in the present invention, the precomputation model is optimized for each time when the raw data is received.

Referring to Fig. 2, starting with a simplest precomputation model, for example, a precomputation model only including a base cuboid is used for description.

1. According to the model, raw data is pre-computed. Calculation is performed by a precomputation engine. A computation process is usually in a (cloud) computation cluster, and a precomputation result is outputted, that is, a multidimensional cube. Simultaneously, a resource monitoring module records all computation resource overhead during precomputation, including a CPU, an internal storage, a memory, a network, and the like.

2. The model is evaluated by executing a load. A query client sends a set of SQL queries according to the query load. A query engine executes query according to the precomputation result, and a query process is generally performed in the cloud computation cluster. Simultaneously, the resource monitoring module records all computation resource overhead during query, including the CPU, the internal storage, the memory, the network, and the like.

3. A scoring module scores the precomputation model. A basis for scoring mainly includes two parts: 1) time to complete all queries; and 2) resource overhead during precomputation and query.

4. A tuning module recommends a new precomputation model according to the current round of model scoring and other information, and returns to step 1 for the next round of precomputation model tuning. Input information of the tuning module includes:

a. The model and score of the current round, it being to be noted that the score includes detailed information such as query time, precomputation, and query resource overhead;

b (If any) the model and actual scores of previous rounds, especially an error between previously predicted model performance and actual model performance;

c. Physical properties of raw data, for example, cardinality of each column, and a correlation between columns; and

d. Behavior characteristics of query load, each SQL query representing an analysis requirement, and all of the analysis requirements representing analysis behavior features of a group of people.

This application draws on the idea of enhanced learning, an Artificial Intelligence (AI) tuning module can continuously obtain feedbacks from environments, and use an iterative evolution strategy to continuously optimize the precomputation model for multiple rounds of tuning, to cause the precomputation model to highly match data physical features and query workloads, thereby achieving the optimal query performance.

It is to be noted that the steps shown in the flow diagram of the accompanying drawings may be executed in a computer system, such as a set of computer-executable instructions, and although a logical sequence is shown in the flow diagram, in some cases, the steps shown or described may be executed in a different order than here.

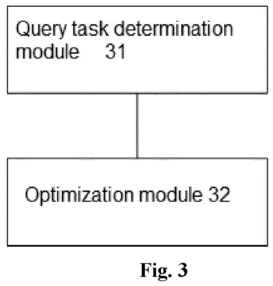

An embodiment of the present invention further provides a precomputation apparatus for continuous iterative optimization. Fig. 3 is a schematic structural diagram of the precomputation apparatus for continuous iterative optimization. The apparatus includes a query task determination module and an optimization module.

The query task determination module 31 is configured to determine a query task corresponding to each of a plurality of time periods.

The optimization module 32 is configured to continuously perform multiple rounds of optimization on a precomputation model according to the query task corresponding to each time period.

The query task determination module 31 is further configured to: for any time period, determine a first query task corresponding to the current time period when the time period starts; and determine a second query task corresponding to a next time period when entering the next time period.

The optimization module 32 is further configured to: optimize, in the time period, the precomputation model according to the first query task; stop optimizing the precomputation model when the time period ends; and when entering the next time period, continuously optimize the precomputation model according to the second query task.

The optimization module 32 is further configured to determine time consumption and query resource consumption of the first query task.

The precomputation model is optimized according to the time consumption and query resource consumption of the first query task.

The optimization module 32 is further configured to calculate a resource of each query server in a cloud server.

Total query resource consumption is calculated according to the resource consumption of each query server.

Those skilled in the art should note that, in one or more of the above examples, functions described in the present invention may be implemented by means of a combination of hardware and software. When the software is applied, the corresponding functions may be stored in the computer-readable medium or transmitted as one or more instructions or codes on the computer-readable medium. The computer-readable medium includes a computer storage medium and a communication medium. The communication medium includes any media transmitting a computer program from one place to another place. The storage medium may be any available media capable of being stored by a general or special computer.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

**Claims**

1. A precomputation method for continuous iterative optimization, comprising:

   determining a query task corresponding to each of a plurality of time periods; and
   continuously performing multiple rounds of optimization on a precomputation model according to the query task corresponding to each time period.

2. The precomputation method for continuous iterative optimization as claimed in claim 1, wherein the continuously performing multiple rounds of optimization on a precomputation model according to the query task corresponding to each time period comprises:

   for any time period, determining a first query task corresponding to the time period when the time period starts;
   optimizing, in the time period, the precomputation model according to the first query task;
   stopping optimizing the precomputation model when the time period ends; and
   determining a second query task corresponding to a next time period when entering the next time period, and continuously optimizing the precomputation model according to the second query task.

3. The precomputation method for continuous iterative optimization as claimed in claim 2, wherein the optimizing the precomputation model according to the first query task comprises:

   determining time consumption and query resource consumption of the first query task; and
   optimizing the precomputation model according to the time consumption and query resource consumption of the first query task.

4. The precomputation method for continuous iterative optimization as claimed in claim 3, wherein the determining a first query task corresponding to the time period comprises:

receiving a query request sent by a client; and
determining the query task of the time period according to the query request.

5. The precomputation method for continuous iterative optimization as claimed in claim 4, wherein the calculating computation resource consumption comprises: calculating a resource of each query server in a cloud server; and

calculating total query resource consumption according to the resource consumption of each query server.

6. A precomputation apparatus for continuous iterative optimization, comprising:

   a query task determination module, configured to determine a query task corresponding to each of a plurality of time periods; and
   an optimization module, configured to continuously perform multiple rounds of optimization on a precomputation model according to the query task corresponding to each time period.

7. The precomputation apparatus for continuous iterative optimization as claimed in claim 6, wherein

   the query task determination module is further configured to: for any time period, determine a first query task corresponding to the time period when the time period starts; and determine a second query task corresponding to a next time period when entering the next time period; and the optimization module is further configured to: optimize, in the time period, the precomputation model according to the first query task; stop optimizing the precomputation model when the time period ends; and when entering the next time period, continuously optimize the precomputation model according to the second query task.

8. The precomputation apparatus for continuous iterative optimization as claimed in claim 7, wherein the optimization module is further configured to: determine time consumption and query resource consumption of the first query task; and optimize the precomputation model according to the time consumption and query resource consumption of the first query task.

9. The precomputation apparatus for continuous iterative optimization as claimed in claim 8, wherein the optimization module is further configured to: calculate a resource of each query server in a cloud server; and

calculate total query resource consumption according to the resource consumption of each query server.

10. The precomputation method for continuous iterative optimization as claimed in claim 5, further comprising:

    calculating a score of the precomputation model in the first query task and/or the second query task by using the following formula, wherein

$$\theta = \frac{\lambda}{A \times B}$$

    $\theta$ is a marked score, A is an occupied computation resource, B is the query time, and $\lambda$ is a preset unit weight.

11. The precomputation method for continuous iterative optimization as claimed in claim 10, further comprising:

    wherein, in the case where computation time is longer, the score is lower, and in the case where the occupied resource is more, the score is lower,
    if query resource consumption is greater than a predetermined resource consumption threshold, optimizing a model structure.

12. The precomputation method for continuous iterative optimization as claimed in claim 1, further comprising:

    acquiring input raw data;
    extracting a plurality of physical indexes in the raw data, wherein each physical index has a same and/or different dimensions, and the physical index is classified according to the dimension of the physical index, to obtain a dimension classification result; and
    optimizing the precomputation model based on the dimension classification result.

13. The precomputation apparatus for continuous iterative optimization as claimed in claim 8, wherein the optimization module is further configured to:

    calculate a score of the precomputation model in the first query task and/or the second query task by using the following formula, comprising:

$$\theta = \frac{\lambda}{A \times B}$$

$\theta$ is a marked score, $A$ is an occupied computation resource, B is the query time, and $\lambda$ is a preset unit weight.

14. The precomputation apparatus for continuous iterative optimization as claimed in claim 13, wherein the optimization module is further configured to:

    wherein, in the case where computation time is longer, the score is lower, and in the case where the occupied resource is more, the score is lower if query resource consumption is greater than a predetermined resource consumption threshold, optimize a model structure.

15. The precomputation apparatus for continuous iterative optimization as claimed in claim 6, further comprising:

    an acquisition module, configured to acquire input raw data;
    an extraction module, configured to extract a plurality of physical indexes in the raw data, wherein each physical index has a same and/or different dimensions, and the physical index is classified according to the dimension of the physical index, to obtain a dimension classification result; and
    the optimization module, configured to optimize the precomputation model based on the dimension classification result.

A query task corresponding to each of a plurality of time periods is determined — S102

Multiple rounds of optimization are continuously performed on a precomputation model according to the query task corresponding to each time period — S104

**Fig. 1**

Raw data

1.Performing
precomputation
on the raw data

Precomputation
engine

Precomputation
resource monitoring

Precomputation
model

Precomputation
result

Query client

2.Evaluating a
model by executing
the query load

query load

Query engine

4. Recommending
a new
precomputation
model, and
entering the next
round of tuning

Precomputation
resource overhead

Query resource
monitoring

Physical features of
raw data

3. Evaluating a model
score according to query
time and resource
consumption

Query resource
overhead

Tuning module

Model score

Scoring module

Behavior features of a
query load

**Fig. 2**

Query task determination module　31

Optimization module 32

**Fig. 3**

## INTERNATIONAL SEARCH REPORT

International application No.

**PCT/CN2021/109932**

**A.    CLASSIFICATION OF SUBJECT MATTER**

G06F 16/2453(2019.01)i;  G06F 16/2458(2019.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, EPODOC, WPI: 联机, 在线, 分析, 预计算, 模型, 迭代, 优化, online, analy+, pre?calculat+, model, iterat+, optimize

**C.    DOCUMENTS CONSIDERED TO BE RELEVANT**

| Category* | Citation of document, with indication, where appropriate, of the relevant passages | Relevant to claim No. |
|---|---|---|
| X | CN 105446979 A (HUAWEI TECHNOLOGIES CO., LTD.) 30 March 2016 (2016-03-30) description, paragraphs 2-3 and 158-190 | 1, 6, 12, 15 |
| A | CN 106796499 A (HUAWEI TECHNOLOGIES CO., LTD.) 31 May 2017 (2017-05-31) entire document | 1-15 |
| A | CN 105988879 A (INTERNATIONAL BUSINESS MACHINES CORP.) 05 October 2016 (2016-10-05) entire document | 1-15 |
| A | CN 107229730 A (BEIJING QIHOO TECHNOLOGY CO., LTD.) 03 October 2017 (2017-10-03) entire document | 1-15 |
| A | CN 110532288 A (SAP SE) 03 December 2019 (2019-12-03) entire document | 1-15 |
| A | US 2018089268 A1 (ELECTRONICS AND TELECOMMUNICATIONS RESEARCH INSTITUTE) 29 March 2018 (2018-03-29) entire document | 1-15 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 March 2022** | **22 March 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/109932**

| Patent document cited in search report | | | Publication date (day/month/year) | Patent family member(s) | | | Publication date (day/month/year) |
|---|---|---|---|---|---|---|---|
| CN | 105446979 | A | 30 March 2016 | WO | 2015196911 | A1 | 30 December 2015 |
| | | | | EP | 3139270 | A1 | 08 March 2017 |
| | | | | US | 2017109207 | A1 | 20 April 2017 |
| CN | 106796499 | A | 31 May 2017 | EP | 3137987 | A2 | 08 March 2017 |
| | | | | US | 2017308575 | A1 | 26 October 2017 |
| | | | | WO | 2016146057 | A2 | 22 September 2016 |
| | | | | | IN201501300 | I4 | 30 September 2016 |
| CN | 105988879 | A | 05 October 2016 | US | 2019354404 | A1 | 21 November 2019 |
| | | | | US | 2016277255 | A1 | 22 September 2016 |
| CN | 107229730 | A | 03 October 2017 | | None | | |
| CN | 110532288 | A | 03 December 2019 | US | 2019362007 | A1 | 28 November 2019 |
| | | | | EP | 3572952 | A1 | 27 November 2019 |
| | | | | US | 2021165793 | A1 | 03 June 2021 |
| US | 2018089268 | A1 | 29 March 2018 | KR | 20180035035 | A | 05 April 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021106886637